(19) Europäisches Patentamt
European Patent Office
Office européen des brevets

(11) Numéro de publication: **0 186 675**
**B1**

(12) # FASCICULE DE BREVET EUROPÉEN

(45) Date de publication du fascicule du brevet: **18.05.88**

(51) Int. Cl.⁴: **B 65 G 47/61**

(21) Numéro de dépôt: **85902559.5**

(22) Date de dépôt: **21.05.85**

(86) Numéro de dépôt international: **PCT/FR 85/00123**

(87) Numéro de publication internationale: **WO 85/05346 (05.12.85 Gazette 85/26)**

(54) **CHARGEUSE POUR UNE CHAINE DE REVETEMENT D'ARTICLES EN VERRE OU CERAMIQUE.**

(30) Priorité: **21.05.84 FR 8407848**

(43) Date de publication de la demande: **09.07.86 Bulletin 86/28**

(45) Mention de la délivrance du brevet: **18.05.88 Bulletin 88/20**

(84) Etats contractants désignés: **AT BE CH DE FR GB IT LI LU NL SE**

(56) Documents cité:
**DE-C-280 391**
**FR-A-365 237**
**FR-A-2 244 680**
**US-A-2 319 474**
**US-A-3 067 861**
**US-A-3 945 486**

(73) Titulaire: **SAINT- GOBAIN EMBALLAGE, Les Miroirs 18, Avenue d'Alsace, F-92400 Courbevoie (FR)**

(72) Inventeur: **DUMAS, Robert, 11, rue Pierre Deliry, F-71100 Chalon s/Saône (FR)**

(74) Mandataire: **Eudes, Marcel, Saint- Gobain Recherche 39 Quai Lucien Lefranc, F-93304 Aubervilliers Cedex (FR)**

**EP 0 186 675 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

Grâce à une meilleure régularité de leurs fabrications, les verriers sont progressivement parvenus, par amincissement des parois, à alléger de plus en plus leurs produits, et spécialement, en verre creux, les récipients, au premier chef les bouteilles et flacons. Cette évolution suscite, notamment parce que l'on souhaite pouvoir recycler ces articles, un intérêt croissant pour divers traitements de surface aptes à augmenter la dureté, réduire le coefficient de frottement, amortir les chocs, protégeant en particulier le verre contre les phénomènes d'abrasion qui en diminuent la résistance.

L'un des procédés les plus intéressants consiste à déposer extérieurement divers revêtements de polymères, en pulvérisant le produit sous forme de solution ou mieux encore de poudre, et ceci de préférence par voie électrostatique, ce qui permet d'obtenir une épaisseur tres régulière, sur un récipient habituellement rendu électroconducteur par un simple préchauffage qui facilite aussi la fixation du dépôt.

L'opération requiert en règle générale, avant projection du revêtement, l'application d'un primaire, effectuée en principe par vote liquide, puis son séchage sous l'effet du préchauffage ; après le dépôt, effectué en une ou plusieurs couches, elle exige au moins une cuisson qui permet le nappage, puis la polymérisation si l'on emploie des résines thermodurcissables, et un temps de refroidissement.

Pour l'effectuer, on suspend de préférence les articles à des têtes équipées de supports tournants, à l'aide de pinces en prise à l'intérieur de l'ouverture, quoiqu'on puisse aussi utiliser des mandrins expansibles ou même opérer sur un récipient placé à l'envers sur des broches verticales.

Seul un bon contact entre une portée inférieure offerte par le support et une portée correspondante de la bague des articles permet d'affirmer que ceux-ci se présenteront bien d'aplomb au traitement. De plus, si l'on veut obtenir une bonne répartition du champ électrique, il est préférable que le contact de l'article avec son support mis à la masse n'intervienne pas uniquement au niveau de la prise effectuée par l'ouverture des mors, mais surtout entre la portée inférieure de ce support et la portée correspondante de la bague. Enfin, il est intéressant de prendre le plan de cette portée pour plan de référence lors du traitement en effet, s'il est permis et généralement avantageux de revêtir non seulement le fût et le fond mais également la partie supérieure du col, il faut éviter d'atteindre autant le buvant de crainte de le salir, que les pinces, notamment pour empêcher que celles-ci ne s'encrassent et ne se bloquent ou que le contact électrique ne cesse de s'effectuer avec le corps des articles, mais aussi la bague et même sa contrebague dont l'épaulement fournira ainsi un bord net au revêtement.

En pratique, les articles sont transportés par un convoyeur à chaîne suspendue qui traverse successivement les postes de fabrication, à savoir postes de primage puis de préchauffage, cabine de pulvérisation électrostatique, four de cuisson et zone de refroidissement. Enfin, la chaîne de ce convoyeur doit évidemment comporter un poste de chargement et un poste de déchargement.

La pulvérisation du revêtement s'effectue dans une zone que délimite un mince rideau d'air transversal créé à hauteur de la bague des récipients par des buses en forme de fentes disposées le long du convoyeur, de part et d'autre de celui-ci, en regard l'une de l'autre la buse de soufflage peut avoir une largeur de 3 mm par exemple et la buse d'aspiration une largeur de 5 mm ; ces faibles dimensions mettent en évidence la précision avec laquelle les articles doivent être présentés par le convoyeur.

Il existe de nombreux autres cas où la fabrication d'articles fragiles, verriers ou même céramiques fait appel à des traitements divers, chimiques ou autres, de leur surface externe, que ce soit à des fins de renforcement, trempe chimique..., ou de décoration, qu'il s'agisse de déposer apprêts, engobes, ou couvertes destinés à masquer ou lisser la surface comme à la rendre étanche ou à favoriser l'adhérence du décor, de fonds colorés, céments, lustres, encres ou émaux, de couvertes améliorant l'aspect, le brillant, la dureté. Or un grand nombre de ces traitements peuvent s'effectuer par projection sur des articles suspendus.

Au chargement, il est possible, à l'aide d'un espaceur à vis par exemple, de disposer les articles à espacement fixe en face des pinces sur un convoyeur à palettes horizontales synchronisé avec la chaîne, une rampe rapprochant progressivement les deux pistes pour permettre la prise des articles par les mandrins. Le poste de déchargement aura une structure analogue. On peut notamment citer à cet égard le brevet US-A-3 945 486, qui constituera à l'état de la technique cité en preambule de la revendication 1.

Toutefois, une telle solution ne va pas sans difficultés car, aux cadences actuelles et même s'il existe une limitation de l'effort, on constate que certains articles cessent de tourner rond au cours du traitement ou que d'autres se trouvent endommagés. L'invention attribue ce fait à un excès de rigidité du système: l'accumulation des tolérances de construction ou d'usure de l'appareillage et de fabrication des articles ne permettrait pas d'obtenir à coup sûr le contact de chacun avec son support sans créer sur le second convoyeur des secousses susceptibles de compromettre le chargement.

Pour transférer des articles d'un convoyeur horizontal à la chaîne d'un convoyeur suspendu situé à un niveau supérieur et équipé de têtes à supports tournants offrant une portée inférieure de référence à la bague de ces articles, l'invention propose alors d'insérer entre les deux appareils, en tant qu'élévateur, un carrousel muni d'un en emble de vérins pneumatiques d'axe vertical équipés de montages supportant les articles et que l'action d'une came de commande alimente tour à tour.

Ce genre de dispositif, connu en soi, a été utilisé, par exemple, d'après le brevet FR-A-365 237, sur une machine de remplissage de bouteilles, pour présenter celles-ci sous les têtes de remplissage équipant à demeure son tambour tournant, en face desquelles étaient montés les vérins, alimentés à la main, puis pour les dégager une fois pleines.

De préference, le dispositif s'inscrit dans une boucle circulaire du convoyeur suspendu, formée autour d'une roue dentée, en prise sur laquelle les maillons successifs de sa chaîne reposent librement, leurs douilles de liaison en face des vérins, et l'effort que chaque vérin applique au maillon correspondant sous l'effet de la pression de l'air comprimé qui l'alimente est inférieur au poids de ce maillon.

De façon avantageuse, les organes de commande des pinces sont eux aussi constitués d'un ensemble de vérins pneumatiques, solidaire du premier sur le carrousel et que commande une seconde came ; les deux ensembles sont montés sur un même arbre vertical solidaire de la roue.

Le carrousel de transfert est ainsi apte à soulever les articles du convoyeur inférieur au convoyeur supérieur pour les présenter en appui sans perturber le mouvement de ce dernier pendant que la commande des pinces provoque le fonctionnement de ces dernières. Par une légère modification de ses cames, il devient au demeurant capable d'effectuer le déchargement du convoyeur supérieur.

Un exemple avantageux de construction d'un dispositif conforme à l'invention sera décrit ci-dessous de façon détaillée, en référence aux dessins, qui montrent :

- figure 1 : une vue en plan schématique du dispositif,
- figure 2 : une coupe en élévation transversale du convoyeur suspendu passant à l'intérieur de la cabine de pulvérisation.
- figure 3 : une coupe en élévation selon la ligne III.III de la figure 1.

Au cours de leur traitement, les bouteilles sont transportées par un convoyeur suspendu 1, dont la chaîne circule sur des rails 2. Ce convoyeur est alimenté à partir de bouteilles A posées en file d'attente sur un convoyeur horizontal à palettes 3.

La machine de chargement est placée entre le convoyeur horizontal 3 et le convoyeur suspendu 1, sur un bâti 4 solidaire de leurs ossatures ; elle comporte essentiellement un carrousel de transfert vertical 5. Ce dernier est alimenté à son niveau inférieur par une roue en étoile 6 qui vient prélever les bouteilles dans la file d'attente du convoyeur 3 pour les déposer une à une à ses postes successifs J. Il élève les bouteilles à son niveau supérieur, où il s'insère entre deux tourteaux de renvoi 8a, 8b dans une boucle du convoyeur suspendu, auquel il les présente et qui vient les y saisir.

Le bâti supporte également un des moteurs 9 d'entraînement de la chaîne du convoyeur 1, avec son barbotin 9a.

Chaque maillon principal 11 de la chaîne porte un couple de galets de roulement 12 et la douille 13 par laquelle il se trouve relié au précédent, 11', est apte a recevoir une pince 14 de suspension des bouteilles. Une telle pince, visible sur la figure 2, est montée dans un manchon tournant 15 porteur d'une roue dentée de mise en rotation 15a qui permet d'obtenir aux différents postes un traitement uni forme de la périphérie des articles; à l'intérieur passe une tige de commande 16, normalement rappelée vers le haut par un ressort 17 et porteuse de cames 16a, 16b, qui agissent sur les mâchoires 18 lorsqu'on appuie sur elle de haut en bas, de façon à les faire se rapprocher pour pouvoir pénétrer dans le goulot d'une bouteille, permettant à celle-ci de se mettre en place sous la portée inférieure 15b du manchon ou, lorsqu'on la relâche, pour les forcer à se réouvrir en saisissant la bouteille, qui se trouvera alors entraînée vers les postes de travail et notamment vers la cabine de pulvérisation électrostatique 19, devant les pistolets 19a, sa bague protégée par les buses 19b.

Comme le montre la figure 3, le carrousel 5 est assemblé sur un arbre creux 20 monté entre une crapaudine 20a et un palier 20b. Cet arbre porte une roue dentée 21, en prise sur la chaîne du convoyeur 1, dont les pinces 14 s'appuient en outre sur un disque 21a et par l'intermédiaire de laquelle il se trouve entraîné en rotation. Il porte également deux tambours 22, 23 formés de deux séries de vérins 24, 25 montés face à face, à intervalle double du pas de la denture, entre les dents de la roue 21. Le tambour supérieur, 22, est monté sur une couronne 22a, portée par la roue 21 et comprend par exemple douze vérins 24, ou plus, dont la tige 26 est munie d'un poussoir 28 capable d'agir sur les tiges de commande 16 des pinces pour permettre à celles-ci de saisir les bouteilles. Le tambour inférieur 23 est formé de deux flasques 23a, 23b recevant un nombre égal de vérins 25, dont la tige 27 supporte, guidé par une coulisse 23c, un plateau 29 muni d'un organe en vé 29a qui permet d'y centrer les bouteilles dans une position précise axée sur la tige des vérins.

Les vérins 24 et 25 sont des vérins pneumatiques à double action alimentés à travers l'arbre 20 depuis un raccord 20c et dont deux cames fixes 30 et 31 commandent respectivement au passage les distributeurs pneumatiques. Les vérins supérieurs 24 sont des vérins dont les deux chambres sont tour à tour mises en pression et à l'air libre sous l'effet de la came 30 pour faire descendre puis remonter leurs poussoirs de façon à commander les pinces. En appuyant sur le distributeur des vérins inférieurs 25, la came 31 met leur chambre supérieure à l'air libre, ce qui provoque la montée progressive du plateau 29 ;

le relâchement du distributeur réadmet l'air comprimé dans cette chambre, ce qui fait redescendre le plateau sous l'effet de son poids et de l'air comprimé admis en permanence dans la chambre inférieure.

La came de commande des vérins supérieurs agit sur un angle de l'ordre de 150°, celle des vérins inférieurs sur un angle un peu plus important, correctement décalé par rapport au précédent.

La roue en étoile 6, de type classique et qu il est donc inutile de décrire en détail, est entraînée en rotation, en synchronisme avec l'arbre, par une transmission formée d'une roue dentée 32, d'une chaîne 33, d'un train inverseur de pignons de renvoi 34a, 34b, puis d'un arbre articulé 35.

On voit que, dans ces conditions, la roue en étoile prélève les bouteilles une à une sur le convoyeur, les écarte au pas de ses alvéoles, qui correspond à celui des plateaux de la machine, puis les distribue une à une sur ces plateaux en position contre le vé. Lorsque le vérin inférieur 25, porteur d'un plateau chargé, se présente devant la came 31, celle-ci provoque l'ascension du plateau, qui n'atteint sa position haute que dans une zone où les vérins supérieurs 24, déjà mis en action, ont fait se rapprocher les mâchoires 18 de la pince correspondante. Lors de la suite de la rotation du tambour, le distributeur du vérin 24 échappe à sa came de commande, 30, ce qui fait remonter le poussoir 28 et libère donc la tige 16, permettant à la pince d'immobiliser la bouteille. Le distributeur du vérin 25 échappe à son tour à la came 31, permettant la redescente du plateau vide, qui se trouve ainsi prêt à recevoir une nouvelle bouteille.

La course maximale des vérins inférieurs à partir du plan horizontal du convoyeur est suffisante pour que la position haute 29' correspondante du plateau 29 se trouve encore sous les pinces mais à une distance du plan horizontal de la portée 15b des manchons inférieure à la hauteur des articles les moins hauts. Il en résulte que, s'il est chargé d'un article, le plateau, lors de son ascension, n'atteint jamais cette fin de course et vient toujours en appliquer la bague contre la portée inférieure du support, ceci avec une vitesse d'ascension puis une force suffisamment faibles pour ne pas imposer à la chaîne de secousse appréciable, ni de choc à l'article ou risquer de l'écraser, mais suffisantes pour le maintenir pendant sa prise par la pince, ce qui évite tout risque qu'il ne vienne à se placer de travers sur cette dernière. La bouteille se trouve ainsi fixée, quelle que soit sa hauteur, en appui sur la portée inférieure du manchon, son goulot à un niveau constant quel que soit le type des bouteilles à traiter, le buvant protégé des pulvérisations de produit et, si besoin est, en bon contact électrique avec le manchon qui met donc la bouteille à la masse dans les conditions souhaitées pour obtenir par pulvérisation électrostatique un revêtement homogène.

Il a déjà été proposé d'utiliser pour suspendre les bouteilles des pinces montées à l'intérieur d'un fourreau où elles sont capables de s'éclipser si aucune bouteille ne se présente en face d'elles lors du chargement ou même si, par suite d'un incident, une bouteille déjà accrochée vient à se rompre. Ces pinces rétractables possèdent un mécanisme assez comparable à celui d'un portemine et que sa commande fait descendre vers la bouteille pour provoquer l'ouverture des pinces lorsqu'il trouve l'appui de la bague mais qui refuse de s'armer ou se déverrouille s'il ne rencontre pas de résistance dans son mouvement de descente. D'une structure plus délicate que les pinces habituelles, elles ont pour avantage de mieux protéger les mâchoires, en cas d'incident, contre des dépôts polluants ou électriquement isolants. Toutefois, dans celles connues et qu'il est inutile de décrire davantage, la mise en butée du mécanisme ne fait que l'armer et la pince ne s'ouvre pour entrer en prise que lors de sa remontée, c'est-à-dire au prix d'un recul qui empêche la portée inférieure du support de garder le contact avec la bague si la bouteille repose alors sur un convoyeur à rampe du type décrit plus haut.

On se rend facilement compte que le dispositif de l'invention présente au contraire l'avantage d'obliger la bouteille à accompagner la pince dans son mouvement en maintenant le contact lors de son recul et qu'il permet d'utiliser les pinces rétractables qui viennent d'être décrites sans rencontrer l'inconvénient ci-dessus.

**Revendications**

1. Dispositif permettant le transfert d'articles creux entre un convoyeur horizontal (3) à palettes et un convoyeur (5) à chaîne suspendue équipé de têtes à supports tournants (15) et à prise intérieure (14) offrant une portée de référence à la bague de ces articles, comprenant un élévateur apte à présenter les articles en synchronisme avec le passage des têtes puis à les mettre en appui sous les supports pour s'effacer une fois qu'ils sont en prise, ou à effectuer l'opération inverse, et caractérisé en ce que cet élévateur est constitué d'un carrousel (5) muni d'un ensemble de vérins pneumatiques d'axe vertical (25) porteurs de montages (29, 29a) et alimentés tour à tour sous l'effet d'une came de commande fixe (31).

2. Dispositif selon la revendication 1, caractérisé en ce que la commande des organes de prise des supports est aussi constitués d'un ensemble de vérins pneumatiques (24), solidaire du premier sur le carrousel et dont une seconde came fixe (30) pilote l'alimentation.

3. Dispositif selon la revendication 2, caractérisé en ce que chaque pince est une pince à tige de commande axiale (16) mobile verticalement à l'Intérieur d'un fourreau tournant dans une douille (13) d'axe vertical et ainsi capable de s'éclipser en l'absence d'article, et que les deux ensembles sont montés face à face sur un même arbre vertical (20) à travers lequel ils sont alimentés en air comprimé.

4. Dispositif selon la revendication 3, caractérisé en ce qu'il s'inscrit dans une boucle circulaire que le convoyeur suspendu suit autour d'une roue dentée (21), solidaire de l'arbre et supportant les maillons de sa chaîne.

5. Dispositif selon la revendication 4, caractérisé en ce que la chaîne est constituée de groupes de deux maillons (11, 11') que relie une douille de support et dont un seul porte, de préférence au voisinage de sa seconde articulation, un couple de galets de roulement (12).

**Patentansprüche**

1. Vorrichtung zum Überführen von Hohlkörpern zwischen einem horizontalen Plattenförderer (3) und einem Hängekettenförderer (1), der mit Köpfen mit drehbaren Halterungen (15) und mit einem unteren Anschlag (14) ausgestattet ist, welcher eine Bezugsfläche für den Ring dieser Gegenstände darstellt, mit einem Elevator, der die Gegenstände synchron mit dem Vorbeigang der Köpfe darbietet und diese sodann unter die Halterungen in Anlage an diese bringt, oder um den zurückzieht, sobald die Gegenstände erfast sind, oder um den umgekehrten Arbeitsvorgang auszuführen, dadurch gekennzeichnet, daß der Elevator durch ein Karussell (5) gebildet ist, das mit einer Schar von Pneumatikzylindern mit vertikaler Achse (25) ausgestattet ist, die mit Tragvorrichtungen (29, 29a) für die Gegenstände versehen sind und abwechselnd unter der Wirkung einer feststehenden Steuerkurve (31) gespeist werden.

2. Vorrichtung nach Anspruch 1, dadurch gekennzeichnet, daß die Steuerung der Greiforgane der Halterungen ebenfalls durch eine Schar von Pneumatikzylindern (24) gebildet ist, die wie die erste Schar mit dem Karussell verbunden ist, wobei eine zweite feststehende Steuerkurve (30) die Speisung der Zylinder steuert.

3. Vorrichtung nach Anspruch 2, dadurch gekennzeichnet, daß jede Klemme eine Klemme (14) mit axialer Steuerstange (16) ist, die im Inneren eines innerhalb einer Hülse (13) mit vertikaler Achse drehbaren Futters in vertikaler Richtung bewegbar ist, so daß die Klemme in Abwesenheit eines Gegestandes zusammengezogen bleiben kann, und wobei die beiden Scharen einander gegenüberliegend auf ein und derselben Vertikalwelle (20) montiert sind, über die sie mit Druckluft gespeist werden.

4. Vorrichtung nach Anspruch 3, dadurch gekennzeichnet, daß sie auf einer kreisförmigen Schleife umläuft, welcher der Hängeförderer über ein Zahnrad (21) folgt, das mit der Welle verbunden ist und die Kettenglieder abstützt.

5. Vorrichtung nach Anspruch 4, dadurch gekennzeichnet, daß die Kette durch Gruppen von zwei Kettengliedern (11, 11') gebildet ist, die durch eine Traghülse verbunden sind und von denen nur eines, vorzugsweise in der Nähe seines zweiten Gelenkes, ein Paar von Rollen (12) trägt.

**Claims**

1. Device allowing transfer of hollow articles between a horizontal plate conveyor (3) and a suspended chain conveyor (1) provided with rotating support heads (15) having interior engagenent (14) offering a reference abutment surface to the neck ring of these articles, comprising an elevator capable of presenting the articles in synchronism with the passage of the heads and then putting them in contact below supports for withdrawing them once they are engaged, or to carry out the reverse operation, and characterised in that the elevator comprises a carousell (5) provided with an assembly of pneumatic jacks having vertical axes (25) carrying mountings (29, 29a) and fed in turn under the effect of a fixed control cam (31).

2. Device according to claim 1, characterised in that control of the engaging members of the supports is also constituted of an assembly of pneumatic jacks (24) integral with the first on the carousel and of which a second fixed cam (30) controls the feed.

3. Device according to claim 2, characterised in that each clamp (14) is a clamp having an axial control stem (16), and vertically movable inside a casing rotating in a pin (13) having a vertical axis, so that it is capable of withdrawal in the absence of the article and in that the two assemblies are mounted face to face on a common vertical shaft (20) through which they are fed with compressed air.

4. Device according to claim 3, characterised in that it is arranged in a circular loop which the suspended conveyor follows about a toothed wheel (21), integral with the shaft and supporting the links of its chain.

5. Device according to claim 4, characterised in that the chain is formed of groups of two links (11, 11') connected to a support sleeve and of which one carries, preferably in the neighbourhood of its second articulation, a pair of roller wheels (12).

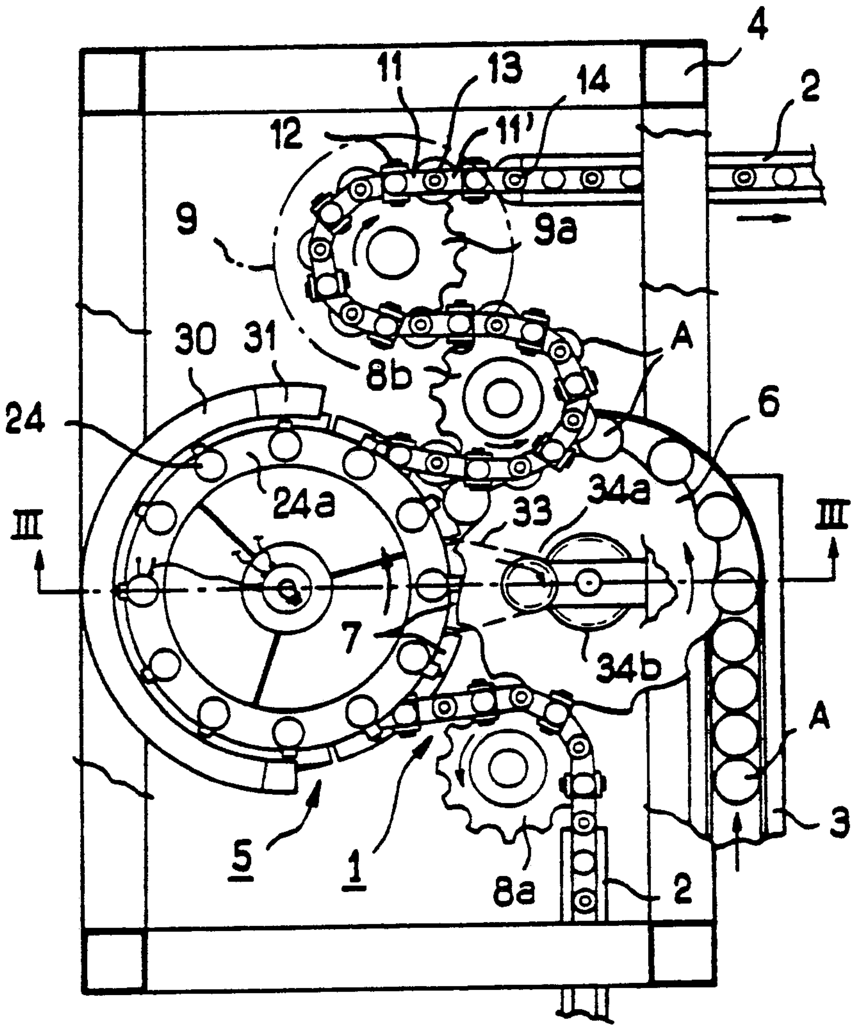
4
2
11
13
14
12
11'
9
9a
A
30
31
8b
6
24
24a
34a
33
III
III
7
34b
A
3
5
1
8a
2

FIG_1

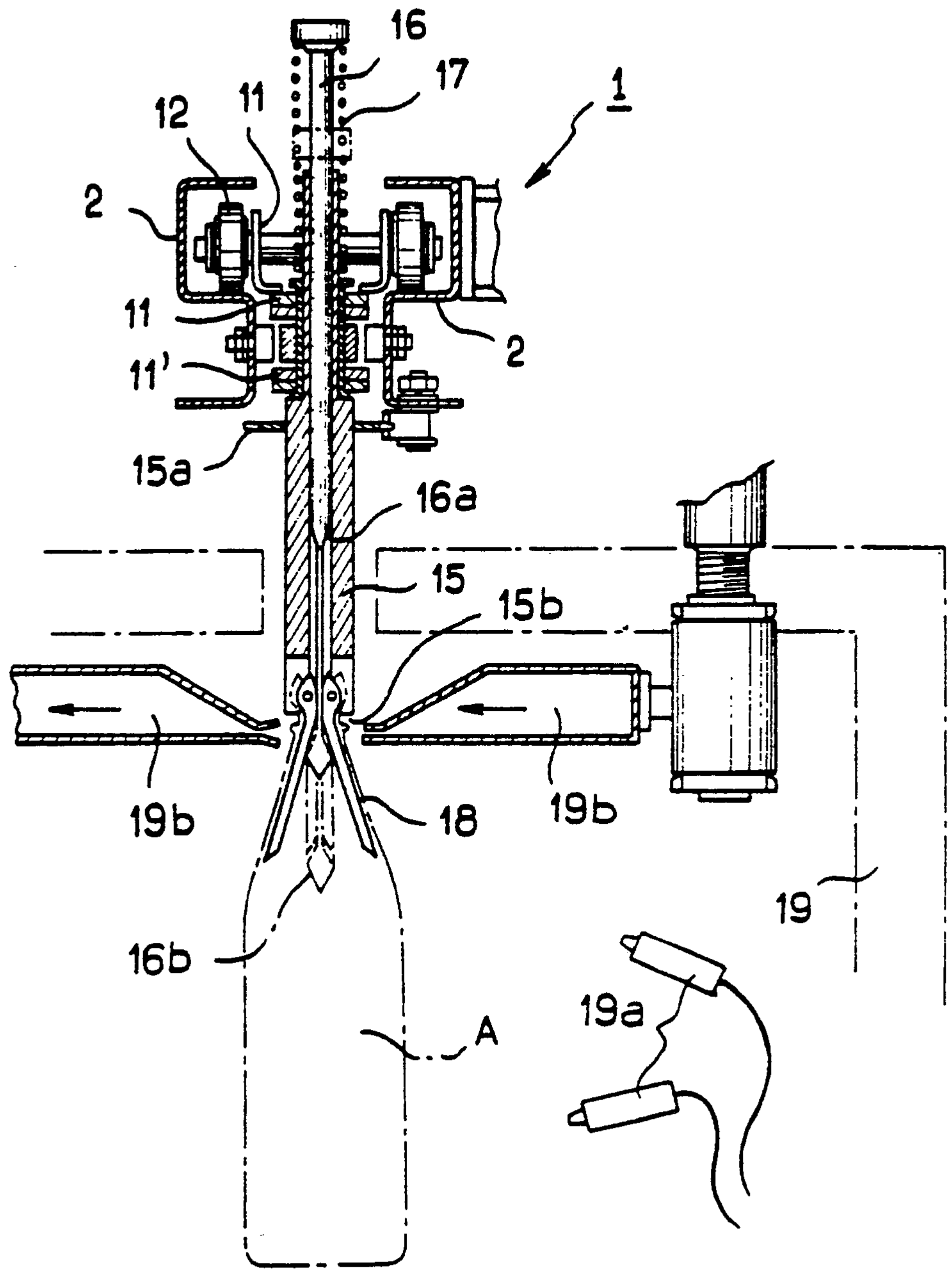


FIG_2

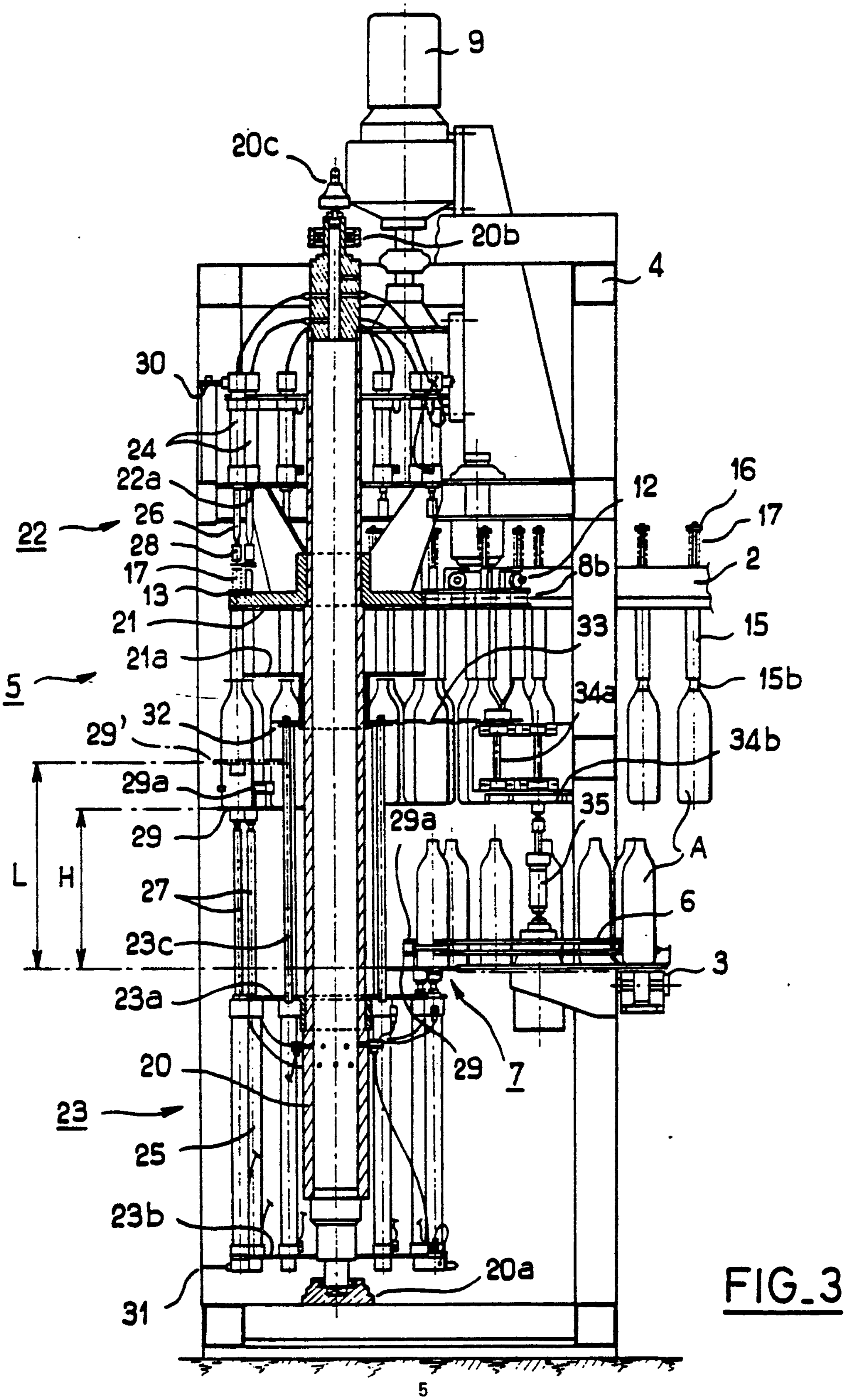
9
20c
20b
4
30
24
22a
22
26
28
17
13
21
21a
5
32
29'
29a
29
L
H
27
23c
23a
20
23
25
23b
31
20a
16
17
12
8b
2
33
15
15b
34a
34b
35
29a
A
6
3
29
7

FIG_3